# EUROPEAN PATENT APPLICATION

(11) **EP 0 888 802 A2**
(43) Date of publication of application: **07.01.1999**
(21) Application number: 98600009.9
(22) Date of filing: 05.06.1998
(51) Int. Cl.: B01D 39/02, B01D 53/02, B01J 20/00

(54) **Porous air filtering and refining material**

(30) Priority: 06.06.1997 GR 97010227
(71) Applicant: Spyridis, Haralambos, 122 41 Aegaleo (Athens) (GR)
(72) Inventor: Spyridis, Haralambos, 122 41 Aegaleo (Athens) (GR)

(57) **Abstract**

Porous material, used as an air refining and sanitation filter, for the absorption of bad odors and toxic gases, for the oxidation of insatiate organic gases and for the destruction of the suspended microorganisms, which intends as an air filter material for closed rooms. Producing process of the mentioned material, based on a mixture of a mineral zeolith, grinding plastic clay, gypsum and oxidizing agents.

This invention states on the composition and on the production's method, by using raw materials with absorption properties, of a final porous material, which is appropriate for the air filtration in closed rooms.

It is applicated for the absorption of bad odors and vapors in closed rooms, for the air sanitation, every where it is demanded, as well as for the extension of the preservation and shelf-time of foods, fresh fruits and vegetables.

## Description

Porous material, used as an air refining and sanitation filter. It is used for the absorpion of odors, vapors and toxic gases, for the oxidation of the insatiate organic gases, as well as for the destruction of the suspended microorganismes. Production's process of the above material.

The invention concerns a special porous material, which is being produced from a mixture of minerals and chemicals through a specific elaboration, so that it finally disposes the following properties:
■ Absorption of toxic gases and vapors (chlorine, ammonia, H₂S, sulfurdioxide, sulfuric gases, volatile thioles, gaseous sulfocarbides etc.) , in order to be used in applications such as air refining, in chemical, medical and biological laboratories, production rooms and sites etc.
■ Oxidation of the insatiate organic gases (ethylene, propylene, acethylene etc..), in order to be applied for the retardation of the maturation and further the decomposition of foods' stuff, in houses' refrigerators and in storage and preservation rooms of fresh fruits and vegetables.
■ Absorption of odors, in order to be applicated against bad odors such as organic odors, uria, smoke, bad odors of closed rooms, conference and entertaintment rooms etc.
■ Sterilization of the atmosphere, by immediate oxidation of the microorganisms, which means that, getting through the filter's pores, the microorganisms come in contact with the powerful oxidizing ingredient and get oxidized, a property which is being used for the air sterilization and the confrontation of pollution sources, as for example in medical and microbiological laboratories, surgery rooms, food preservation rooms etc.

According to scientific works, which concern physical and chemical proceedings of gases' absorption on solid items, it has been known that there is a considerable space in the research of the discovery of materials, with such physical and chemical properties, so that they cover a wide field of applications, since every new investigation has always been set in boundaries, in order to be used only in special applications, like absorption of gaseous halogens in active carbon etc.)

Because of the fact that the odors' absorption mechanism, tested on solid items, presupposes the porosity of the solid item (with exception of magnetic and electromagnetic filters), the problem which has been set, consists one sides of minerals' or petrifactions' discovery in natural grain form (with or without mechanical elaboration), with absorption ability , in aqueous solutions, of several toxic gases, and othersides of the elaboration of the discovered active materials, so that the final product disposes an extremely high absoption capacity, against the same substances, in the gaseous phase.

According to that search, as it concerns the discovery of the raw materials, which compose a filter with a broad spectrum absorption's ability, it has been found, that they should have the ability of producing of hemipolar bonds, or at least of fractions of those bonds, which are made through the total electrical neutralization of the freight of the exchanged items, as by integral heteropolar bonds.

The fact that zeolith is a material with ionexchange capacity (with a big density of electrostatic junction sites), comes to the conclusion, that the active ionexchange places must leave big margins of their exploitation, as they are used for the absorption of cationic corpuscles.

Except of the pure ionic bonds with the cationic corpuscies, there are further developped, as the measuring shows, bonds which are a little weaker but more crowded, also with corpuscles, which dispose free electron couples, such as ammonia, H₂S, several kinds of gaseous sulfurcarbides, all halogenes and especially chlorine.

Finally it results, that such a material, may function as a natural, electromagnetic filter, by tying particles or corpuscles, in the gaseous phase, with Van der Waals bonds.

Starting on the basis of a natural mineral zeolith (with grain size 0,1-1mm), with the following chemical composition:
- SiO₂: : 66.8 - 68.8 %
- Al₂O₃: : 12 - 13 %
- Fe₂O₃: : 0.9 - 1.1 %
- CaO: : 3.4 - 3.8%
- MgO: : 1.3 - 1.7%
- K₂O: : 1.0-1.6 %
- Na₂O: : 0.5 - 0.9 %,
which composes one of the raw production materials, there have been made mixtures, by addition of the following materials, in different analogies:
- 1) Natural mineral Zeolith: : 25 - 95 %
- 2) Grinding plastic clay: : 0.5 - 45 %
- 3) Gypsum: : 0.5 - 15 %
- 4) Potassium permanganate: : 1.0 - 35 %
- 5) Potassium dichromate: : 0.1 - 8 %
- 6) Sodium bicarbonate: : over 1 %
- 7) Water: : 1/5 - 3times more than the solid mixture,
so that, with the thorought mixing of the above ingredients, results a homogeneous mass (paste), with fluidity similar to the one of the strained yoghort.
This mass is put, later, in special constructed elastic formes (from silicone) and is exposed in radiation of micro-waves, so that it dries and simultaneously swells up, so that it finally takes a volume of short of 1,5 times more, than the wet mixture, before drying.
This baked paste is then let to dry out in the air, or it may dry out even better and faster with the provision of dry hot air. So, it is ready to be used as an air filter, with the properties that have been discribed before.
The clay and the gypsum are used for the improvement of the mechanical and static stregth of the material. It means that they tie the material while it is swelling up, so that it does not turn into pieces. During the swelling up, the active absorption places remain free, in a big degree, as they stay non packed inside of the solid structural net.
The addition of strong oxidizing agents offers the air microorganisms' oxidation and destruction ability. Getting througt the filter, the microorganisms come in contact with the oxidizing ingredients, they get destroyed at once and dissappear from the room, by the restraining of their dead cellules on the internal surface of the filter's pores, while the air keeps circulating.
The second property which is offered beyond, by the addition of oxidizing agents, is the ability to oxidize also the insatiate organic gases into satiate ones, mainly oxides. As it is well known, the insatiate organic gases, like acetylene (which is used for the artificial maturation of fruits) and ethylene, are responsible for the foods' alteration and putrefaction.
Through some tests that have been done, by producing experimentally samples of the material, as well as with the ingredients addition in different analogies, we had the indication that the best restitution, concerning the absorption, in combination with the attainment of sufficient mechanical strength of the grains, as with the ideal porosity, can be succeeded with the following proportion of ingredients' mixing:
index I, which follows, gives the addition analogy of all the ingredients for the preparation of a mass of 277.2 g weight, as well as the weight % analogy.

| INDEX I | | |
|---|---|---|
| *Ingredient* | *Added mass* | *weight %* |
| Zeolith | 115 g | 41.5 % |
| Clay | 20 g | 7.2 % |
| Gypsum | 20 g | 7.2 % |
| Sodium bicarbonate | 13.5 g | 4.9 % |
| Potassium permanganate | 7.2 g | 2.6 % |
| Potassium dichromate | 1.5 g | 0.54 % |
| Water | 100 g | 36.06 % |
| Total | 277.2 g | 100 % |

This paste, which weights 277.2 g, expels during its drying, through its exposition to micro-waves radiation, a mass of 106.8 g, in form of water steam and carbon dioxide, so that finally remain 160.4 g of a porous material, while at the same time, the mass swells up for about 50%.
So, the weight analogy of the ingredients, concerning the final product, is the next one:

| *Ingredient* | *weight % in the final product* |
|---|---|
| Zeolith | 71.7 % |
| Plastic clay | 12.47 % |
| Excess & rest of Sodium bicarbonate's splitting plus rest of gypsum's dewatering | 10.4 % |
| Potassium permanganate | 4.5 % |
| Potassium dichromate | 0.93 % |
| Water | 0 % |
| Total | 100 % |

The trials on the filter's absorption capacity have shown a high degree of straining odors in closed places (refrigerators) and ability of retarding of the alteration of foods, fruits and vegetables, in preservation rooms.
The invention is applied with the use of the porous material as a pure odors' filter, placed in small plastic perforated cases. It is also used in houses' refrigerators, for the deodoration and sanitation of hygiene rooms, W.C., stores etc.
In rooms, which present microbiological pollution and bad odors, like in medical, microbiological or chemical laboratories, surgeries etc., where is succeeded the air sanitation.
In chemical, biological and medical laboratories, for the toxic gases' and poissons' absorption.
In gathering concentration rooms (extensions, conventions, entertainment rooms), for the absorption of the bad odors and the cleaning and sterilization of the atmosphere.
In food preservation rooms, where according to the cleaning, the sanitation of the atmosphere, as well as the neutralization of the insatiate organic gases, is succeeded a significant extension of the preservation and shelf-time of foods and fresh fruits and vegetables.

## Claims

1. Porous material, used as an air refining and sanitation filter, specificated from the fact, that it is being produced based on a mixture of a natural, mineral zeolith and grinding plastic clay as raw materials, with the addition, in small quantities in relation to the first, as assisting ones, of gypsum, potassium permanganate, potassium dichromate, sodium bicarbonate and water.

2. Porous material, used as on air refining and sanitation filter, according to the claim No. 1, specificated from the use mainly of zeolith (grain size 0.1 - 1 mm) and of grinding plastic clay, which form the greater port of the final product.

3. Porous air filtration material, according to the claim No. 1, specificated from the fact, that the zeolith is added in a proportion between 10 and 95 weight %, referring to the final product.

4. Porous air filtration material, according to the claim No. 1, specificated from the fact, that the zeolith is added in a proportion, preferably between 30 and 80 weight %, referring to the final product.

5. Porous air filtration material, according to the claim No. 1, specificated from the use of grinding plastic clay, as an absorption agent, in a proportion between 5 and 50 weight %, referring to the final product.

6. Porous air filtration material, according to the claim No. 1, specificated from the use of grinding plastic clay, as a structural lengths improving agent, in a proportion between 1 and 45 weight %, referring to the final product.

7. Porous air filtration material, according to the claims No. 5 and No. 6, specificated from the fact, that the plastic clay is added in a proportion, preferably between 5 and 30 weight %, referring to the final product.

8. Porous air filtration material, according to the claim No. 1, specificated from the use of potassium permanganate, as oxidizing agent, added in a proportion between 1.0 and 35 weight %, referring to the final product.

9. Porous air filtration material, according to the claim No. 1, specificated from the use of potassium dichromate, as oxidizing agent, added in a proportion between 0.5 and 10 weight %, referring to the final product.

10. Porous air filtration material, according to the claim No. 1, specificated from the use of sodium bicarbonate, for the swelling up of the mixture and the attainment of porosity, added in a proportion between 1.5 and 20 weight %, referring to the prepared wet mixture.

11. Porous air filtration material, according to the claim No. 10, specificated from the fact, that the sodium bicarbonate, which is added for the swelling up of the wet mixture and the attainment of a sufficient porosity, is added in a proportion, preferably between 3.0 and 10 weight %, referring to the prepared wet mixture.

12. Production process of the porous air filtration material, according to the claims 1-10, specificated from the fact, that, through mixing of the raw materials, is prepared, in a first stage, a wet mass (paste), which, in a second stage, dries and simultaneously swells up, through its exposure in micro-waves' radiation, producing finally the mentioned porous material.

13. Use of the mentioned porous air filtration material, which is produced according to the claim No. 1 and according to the process described in the claim No. 12, for the air cleaning in closed rooms, by odors', vapors' and toxic gases' absorption, for the air sanitation, through the destruction of the suspended microorganisms, as well as for the foods' and fresh fruits' and vegetables' preservation, by the extension of their shelf-time, through oxidizing of the insatiate organic gases, which are responsible for their maturation and further their decomposition.

14. Use of the mentioned porous air filtration material, which is produced according to the claim No. 1 and according to the process described in the claim No. 12, without the addition of oxidizers, for the air cleaning in closed rooms, by absorption of bad odors, toxic vapors and gases.
